# EUROPEAN PATENT APPLICATION

(11) **EP 2 311 779 A1**
(43) Date of publication of application: **20.04.2011**
(21) Application number: 09181044.0
(22) Date of filing: 31.12.2009
(51) Int. Cl.: C02F 1/44

(54) **Portable water purifier and method of purifying water by using the same**

(30) Priority: 14.10.2009 CN 200910186213
(71) Applicant: Shenzen JDL Environmental Protection Ltd., 1175 Nanshan Avenue, Nanshan District Shenzhen Guangdong 518052 (CN)
(72) Inventor: Liao, Zhimin, 518052, Shenzhen Guangdong (CN); Yuan, Zhihua, 518052, Shenzhen Guangdong (CN); Jiang, Xingfu, 518052, Shenzhen Guangdong (CN); Guo, Jingkui, 518052, Shenzhen Guangdong (CN); Wang, Jianhua, 518052, Shenzhen Guangdong (CN); Yang, Shengyun, 518052, Shenzhen Guangdong (CN)
(74) Representative: Hryszkiewicz, Danuta

(57) **Abstract**

A portable water purifier having a shell, a solar cell, a power storage system, a micro booster pump, and a membrane module. The solar cell is disposed on the shell. The power storage system, the micro booster pump, and the membrane module are disposed integratedly in the shell. The solar cell is connected to the power storage system and the combination thereof provides power for the micro booster pump. The micro booster pump is connected to the membrane module. A method of purifying water with the portable water purifier is also taught. The portable water purifier can produce instant safe, and healthy drinking water even when power supply is lacking.

## Description

The invention relates to a portable water purifier and a method of purifying water of using the same.

Bringing to people sanitary, healthy, and instant drinking water, portable water purifiers have aroused more and more attention. Conventional portable water purifiers which are involved in processing such as fiber filter, activated carbon adsorption, or ion exchange can effectively remove sediment, suspended solids, and bacteria, but have limited influence on organic pollutants and colloidal substances. Additionally, these portable water purifiers are very heavy for carrying.

Membrane separation technology can effectively remove various pollutants in water and produce high quality of water, but power equipment such as booster pump is required, which causes inconvenient when power supply is lacked. As renewable energy, solar energy is clean, safe, and economic. Portable water purifiers drived by solar energy have a bright prospect.

In view of the above-described problems, it is one objective of the invention to provide a portable water purifier which can produce safe, healthy, and instant drinking water even when power supply is lacked.

It is another objective of the invention to provide a method of purifying water with the portable water purifier.

To achieve the above objectives, in accordance with one embodiment of the invention, there is provided a portable water purifier which can produce safe, healthy, and instant drinking water even when power supply is lacked, the portable water purifier comprising a shell, a solar cell, a power storage system, a micro booster pump, and a membrane module, wherein the solar cell is disposed on the shell; the power storage system, the micro booster pump, and the membrane module are disposed integratedly in the shell; the solar cell is connected to the power storage system and the combination thereof provides power for the micro booster pump; the micro booster pump is connected to the membrane module.

In a class of this embodiment, the solar cell is a micro monocrystalline silicon solar cell, a polycrystalline silicon thin-film solar cell, or an amorphous silicon thin-film solar cell.

In a class of this embodiment, the power storage system comprises a converter and a battery, and the converter converts and saves electric energy generated by the solar cell in the battery; when the micro booster pump works, the power storage system transports direct current and supplies power for it.

In a class of this embodiment, the battery is a lead-acid battery, a nickel-hydride battery, or a lithium battery.

In a class of this embodiment, the micro booster pump is connected to the membrane module and provides filtration pressure for membrane purification of raw water.

In a class of this embodiment, the micro booster pump is a minipump having small size and light weight, and the model and head thereof can be selected in line with raw water, for example, if the raw water is fresh water, a pump having outlet pressure less than 0.6 Mpa is selected, if the raw water is seawater, a pump having outlet pressure more than 0.8 Mpa is selected.

In a class of this embodiment, the membrane module is composed of ultrafiltration membrane, nanofiltration membrane, or reverse osmosis membrane, and can be selected in line with pollutants in raw water, for example, if the pollutants are micro-organisms, viruses, and organic pollutants, an ultrafiltration membrane module is selected, if the pollutants are heavy metal, an nanofiltration membrane module or a reverse osmosis membrane module is selected, if the raw water is seawater, a reverse osmosis membrane module is selected.

In a class of this embodiment, the raw water is polluted surface water, groundwater, or seawater.

In accordance with another embodiment of the invention, there is provided a method of purifying water with the portable water purifier, comprising the steps of:

1) introducing raw water raw into the portable water purifier and turning on it;

2) supplying power by the power storage system to the micro booster pump and driving the micro booster pump to work;

3) enhancing filtration pressure of the raw water by the micro booster pump; and

4) removing hazardous substances by the membrane module.

Raw water purified with the portable water purifier meets the standard for "Bottled purified drinking water" (GB17323-1998), so the portable water purifier can be widely-used in army, field operations, adventure tourism, and rural areas.

Advantages of the invention are summarized below:

1) Solar energy as the power of the portable water purifier is clean and renewable;

2) the portable water purifier can be used widely due to out of the limitation of power supply;

3) that membrane separation technology is used for removal of hazardous substances such as organic pollutants, heavy metal, bacteria, and virus ensures to obtain healthy water; and

4) that the solar cell, the power storage system, the booster pump, and the membrane module are integrated makes the portable water purifier small, light, and convenient for carrying.

### BRIEF DESCRIPTION OF THE DRAWINGS

The invention is described hereinbelow with reference to accompanying drawings, in which:

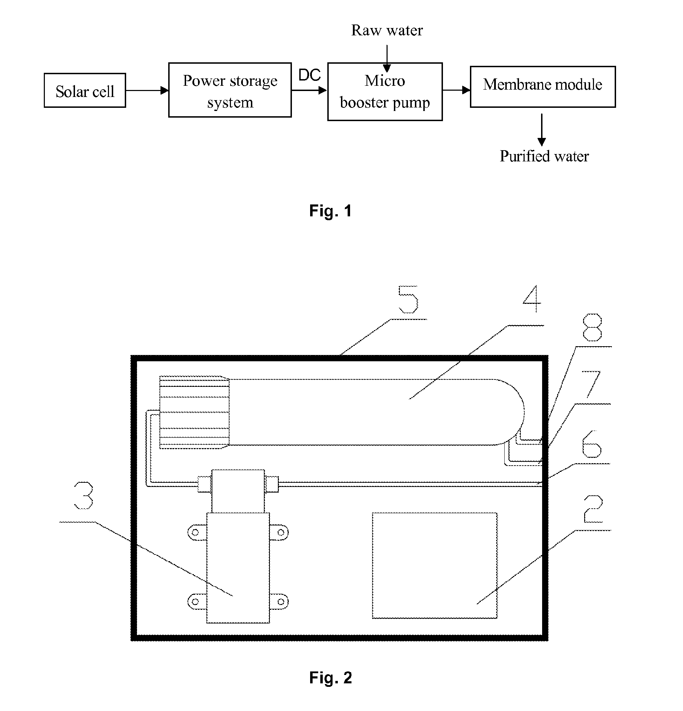

FIG. 1 is a schematic diagram of a portable water purifier according to one embodiment of the invention;

FIG. 2 is a schematic diagram of the internal structure of a portable water purifier according to one embodiment of the invention;

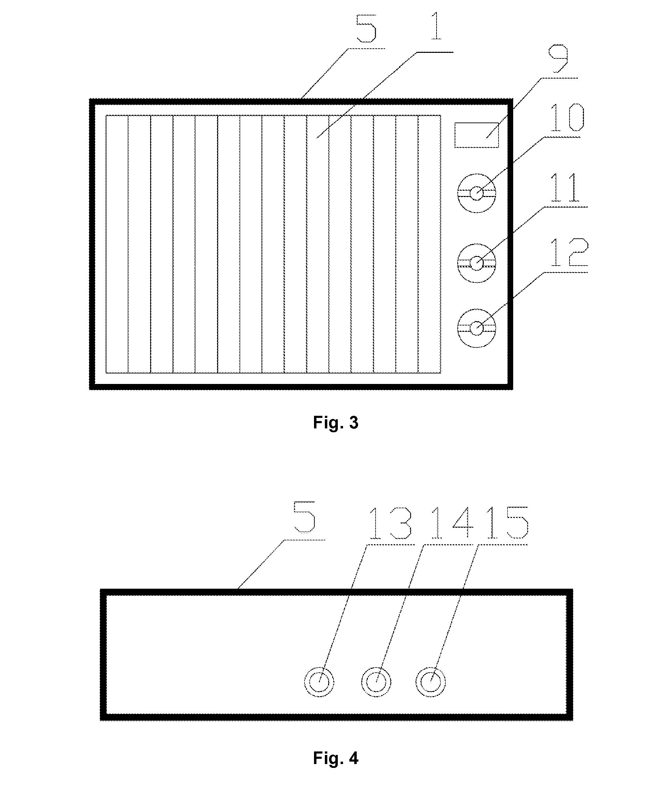

FIG. 3 is a top view of a portable water purifier according to one embodiment of the invention; and

FIG. 4 is a right view of a portable water purifier according to one embodiment of the invention.

For further illustrating the invention, experiments detailing a portable water purifier which can produce safe, healthy, and instant drinking water even when power supply is lacked and a method of purifying water of using the same are described below. It should be noted that the following examples are intended to describe and not to limit the invention.

A portable water purifier which can produce safe, healthy, and instant drinking water even when power supply is lacked comprises a solar cell **1**, a power storage system **2**, a micro booster pump **3**, a membrane module **4**, a shell **5**, an inlet pipe **6**, a outlet pipe **7**, a retentate pipe **8**, a power switch **9**, a retentate valve **10**, an outlet valve **11**, and an inlet valve **12**, a retentate outlet **13**, a water outlet **14**, and a water inlet **15**. The power switch **9** and the solar cell **1** are disposed on the shell **5**. The retentate valve **10**, the outlet valve **11**, the inlet valve **12** are disposed on the shell **5** and control the retentate outlet **13**, the water outlet **14**, and the water inlet **15** respectively. The power storage system **2**, the micro booster pump **3**, the membrane module **4**, the inlet pipe **6**, the outlet pipe **7**, and the retentate pipe **8** are disposed integratedly in the shell **5**. The solar cell **1** is connected to the power storage system **2** and the combination thereof provides power for the micro booster pump **3**. The inlet pipe **6**, the micro booster pump **3**, and the membrane module **4** are connected sequentially. The outlet pipe **7** and the retentate pipe **8** are connected to the membrane module **4** respectively. The retentate outlet **13**, the water outlet **14**, and the water inlet **15** are disposed at the side of the shell **5**.

A method of purifying water with the portable water purifier comprises the steps of:

1) introducing raw water into the inlet pipe **6**, turning on the power switch **9**, the inlet valve **12**, the outlet valve **11**, and turning off the retentate valve **10**;

2) transporting power by the power storage system **2** to the micro booster pump **3** and driving to work;

3) enhancing filtration pressure of the raw water by the micro booster pump **3**;

4) removing hazardous substances such as organic pollutants, heavy metal, bacteria, and virus of the raw water by the membrane module **4**;

5) turning on the outlet valve **11** and releasing the purified water; and

6) turning on the retentate valve **10** and releasing the retentate periodically.

The working principle of the power storage system **2** is summarized below:

1) Upon exposed to sunlight, the solar cell **1**collects and converts solar energy into electric energy;

2) The electric energy is save in the power storage system **2**; and

3) Upon turning on of the power switch **9**, the power storage system **2** supplies direct current for the micro booster pump **3**.

The membrane module **4** of the portable water purifier is a household ultrafiltration membrane module, a nanofiltration membrane module, or a reverse osmosis membrane module.

The water quality is as follows: pH = 6.5 - 8.0, Turbidity ≤1.0 NTU, SS ≤ 1.0 mg/L, COD_{Mn} ≤ 3.0 mg/L, Total dissolved solids ≤ 200 mg/L, Total hardness ≤ 25 mg/L, which meets the standard for "Bottled purified drinking water" (GB17323-1998).

For the portable water purifier, solar energy is used as the power, membrane separation technology is used for removal of hazardous substances, and the solar cell, the power storage system, the booster pump, and the membrane module are integrated, so the portable water purifier is small, light, and convenient for carrying, and water purified by it has good quality.

While particular embodiments of the invention have been shown and described, it will be obvious to those skilled in the art that changes and modifications may be made without departing from the invention in its broader aspects, and therefore, the aim in the appended claims is to cover all such changes and modifications as fall within the true spirit and scope of the invention.

## Claims

1. A portable water purifier comprising
1) a shell;
2) a solar cell;
3) a power storage system;
4) a micro booster pump; and
5) a membrane module;
**characterized in that**
said solar cell is disposed on said shell;
said power storage system, said micro booster pump, and said membrane module are disposed integratedly in said shell;
said solar cell is connected to said power storage system and the combination thereof provides power for said micro booster pump; and
said micro booster pump is connected to said membrane module.

2. The portable water purifier of claim 1, **characterized in that** said solar cell is a micro monocrystalline silicon solar cell, a polycrystalline silicon thin-film solar cell, or an amorphous silicon thin-film solar cell.

3. The portable water purifier of claim 1, **characterized in that** said power storage system comprises a converter and a battery.

4. The portable water purifier of claim 3, **characterized in that** said battery is a lead-acid battery, a nickel-hydride battery, or a lithium battery.

5. The portable water purifier of claim 1, **characterized in that** said micro booster pump is a minipump having small size and light weight.

6. The portable water purifier of claim 1, **characterized in that** said membrane module is an ultrafiltration membrane module, a nanofiltration membrane module, or a reverse osmosis membrane module.

7. A portable water purifier comprising
1) a shell;
2) a power switch;
3) an inlet valve;
4) an outlet valve;
5) a retentate valve;
6) a solar cell;
7) a power storage system;
8) a micro booster pump;
9) a membrane module;
10) an inlet pipe;
11) an outlet pipe; and
12) a retentate pipe;
**characterized in that**
said power switch and said solar cell are disposed on said shell;
said inlet valve, said outlet valve, and said retentate valve are disposed on said shell and control said inlet pipe, said outlet pipe, and said retentate pipe respectively;
said power storage system, said micro booster pump, said membrane module, said inlet pipe, said outlet pipe, and said retentate pipe are disposed integratedly in said shell;
said solar cell is connected to said power storage system and the combination thereof provides power for said micro booster pump;
said inlet pipe, said micro booster pump, and said membrane module are connected sequentially; and
said outlet pipe and said retentate pipe are connected to said membrane module respectively.

8. The portable water purifier of claim 7, **characterized in that** said solar cell is a micro monocrystalline silicon solar cell, a polycrystalline silicon thin-film solar cell, or an amorphous silicon thin-film solar cell.

9. The portable water purifier of claim 7, **characterized in that** said power storage system comprises a converter and a battery.

10. The portable water purifier of claim 9, **characterized in that** said battery is a lead-acid battery, a nickel-hydride battery, or a lithium battery.

11. The portable water purifier of claim 7, **characterized in that** said micro booster pump is a minipump having small size and light weight.

12. The portable water purifier of claim 7, **characterized in that** said membrane module is an ultrafiltration membrane module, a nanofiltration membrane module, or a reverse osmosis membrane module.

13. A method of purifying water with the portable water purifier of claim 1, comprising the steps of:
1) introducing raw water into said portable water purifier and turning on it;
2) supplying power by said power storage system to said micro booster pump and driving said micro booster pump to work;
3) enhancing filtration pressure of the raw water by said micro booster pump; and
4) removing hazardous substances by said membrane module.

14. The method of claim 13, **characterized in that** said solar cell is a micro monocrystalline silicon solar cell, a polycrystalline silicon thin-film solar cell, or an amorphous silicon thin-film solar cell.

15. The method of claim 13, **characterized in that** said membrane module is an ultrafiltration membrane module, a nanofiltration membrane module, or a reverse osmosis membrane module.
